# DEMANDE DE BREVET EUROPEEN

(11) **EP 3 104 586 A1**
(43) Date de publication de la demande: **14.12.2016**
(21) Numéro de dépôt: 16173257.3
(22) Date de dépôt: 07.06.2016
(51) Int. Cl.: H04M 1/725

(54) **PROCÉDÉ DE PARTAGE D'UN CONTENU NUMÉRIQUE EN COURS DE COMMUNICATION**

(30) Priorité: 09.06.2015 FR 1555266
(71) Demandeur: Orange, 75015 Paris (FR)
(72) Inventeur: MONCOMBLE, Ghislain, 22310 PLESTIN LES GREVES (FR); BAILLY, Marc, 22560 TREBEURDEN (FR)

(57) **Abrégé**

L'invention concerne un procédé de partage d'un contenu numérique associé à une communication entre un premier terminal et un terminal destinataire, le procédé comportant les étapes suivantes mises en oeuvre sur le premier terminal: association (200) d'un contenu numérique avec au moins une commande de navigation et au moins une commande de restitution, commande (202) de transmission du contenu numérique vers le terminal destinataire, et à l'établissement de la communication, détection (204) de la mise en oeuvre d'au moins une commande de navigation associée au contenu, et transmission (205) vers le terminal destinataire d'une commande de restitution associée au document. L'invention concerne également un dispositif et un terminal mettant en oeuvre le procédé, ainsi que, de façon correspondante, des procédés, dispositifs et terminaux de restitution d'un contenu partagé.

## Description

### DOMAINE TECHNIQUE

La présente invention se rapporte au domaine des télécommunications et se rapporte en particulier au partage de contenu en cours d'une communication.

### ART ANTÉRIEUR

Le téléphone mobile est aujourd'hui un moyen de communication incontournable. Depuis quelques années, avec la montée en puissance des terminaux et l'émergence du haut débit mobile de type 3G ou 4G, les usages du mobile se sont étendus à l'accès Internet nomade. En particulier, les terminaux de type smartphone offrent une multitude de services à leurs utilisateurs via le téléchargement d'applications diverses. Ces terminaux sont en outre équipés de différents capteurs tels que par exemple, un appareil photo et un micro permettant de capturer des images ou des vidéos. Dès lors, les utilisateurs peuvent à tout moment capturer des images et les partager avec d'autres utilisateurs par l'intermédiaire de la connectivité haut débit dont ils disposent. Par exemple, les utilisateurs peuvent échanger de tels contenus par l'intermédiaire de réseaux sociaux, de courriels ou encore de MMS (Multimedia Messaging Service).

De tels terminaux permettent également la réception et la consultation de contenus multimédias partagés par des correspondants. Par exemple, un smartphone offre la possibilité au travers de diverses applications de recevoir et de consulter des emails comportant des pièces jointes telles que des photos ou des vidéos, ou de consulter des albums photos en ligne sur différents services de partage entre utilisateurs, ou encore de recevoir des MMS ou des contenus partagés lors d'une conversation de messagerie instantanée.

Bien entendu, les smartphones permettent aussi d'établir des communications vocales avec des correspondants.

Ainsi, les smartphones permettent aujourd'hui d'échanger tout type d'information, en tout lieu et à tout moment et selon différentes modalités créant de nouveaux usages et de nouveaux modes de communication. Malgré tout, ces partages de contenus se font souvent au travers d'un écosystème applicatif non standard qui n'est pas toujours interopérable. En particulier, partager des documents au cours d'une communication vocale nécessite la mise en oeuvre de vecteurs de communications différents et des manipulations parfois hasardeuses.

Des initiatives telles que la norme RCS (Rich Communication Suite) créée à l'initiative de la GSM Association (GSMA) et diffusée sous la dénomination commerciale « Joyn » visent à fournir un cadre unifié et interopérable pour ce nouveau mode de communication, dit de communication enrichie. En particulier, RCS fournit des outils pour établir des communications auxquelles les utilisateurs peuvent ajouter des contenus. Par exemple, RCS définit un standard pour l'échange de vidéo ou d'image au cours d'une communication vocale.

Malgré les efforts d'unification et de simplification réalisés, ces solutions ne surmontent pas le problème ergonomique que pose l'utilisation simultanée de différentes modalités de communication sur un terminal mobile de petite taille tel qu'un smartphone. En effet, la sélection et l'envoi d'un ou plusieurs documents au cours d'une communication vocale nécessite des manipulations qui, pendant qu'elles sont réalisées par l'émetteur, interrompt la conversation. D'autre part, les différents éléments d'interface graphique permettant de sélectionner et de partager un contenu au cours d'une communication occupent un espace non négligeable sur un écran qui est généralement de petite taille.

Un des buts de l'invention est de remédier aux inconvénients précités de l'état de la technique et/ou d'y apporter des améliorations.

### RÉSUMÉ DE L'INVENTION

À cet effet, l'invention concerne un procédé de partage d'un contenu numérique associé à une communication entre un premier terminal et un terminal destinataire, le procédé étant tel qu'il comporte les étapes suivantes mises en oeuvre sur le premier terminal:
- Association d'un contenu numérique avec au moins une commande de navigation et au moins une commande de restitution,
- Commande de transmission du contenu numérique vers le terminal destinataire, et
   À l'établissement de la communication,
- Détection de la mise en oeuvre d'au moins une commande de navigation associée au contenu, et
- Transmission vers le terminal destinataire d'une commande de restitution associée au document.

Un contenu numérique à partager, par exemple une image, est associé à des commandes de navigation et de restitution avant l'établissement d'une communication puis transmis vers le terminal du destinataire. Le contenu numérique peut être transmis vers le terminal destinataire avant l'établissement de la communication, ou au cours de l'établissement de la communication. Lorsque la communication est établie, le premier terminal peut détecter une commande de navigation activée par un utilisateur et déclencher la transmission d'une commande de restitution vers le terminal destinataire. La commande de restitution est interprétée par le terminal destinataire et peut consister par exemple en l'affichage du contenu partagé. Les commandes de navigation sont destinées à être exécutées sur le premier terminal et permettent, lorsqu'elles sont détectées, de déclencher l'envoi d'une commande de restitution vers le terminal destinataire.

Le contenu étant transmis au terminal destinataire avant l'établissement de la communication, celui-ci peut être affiché immédiatement, sans latence due au temps de transmission, sur le terminal destinataire à la réception de la commande de restitution correspondante. D'autre part, la commande de restitution est émise vers le terminal destinataire à la détection d'une commande de navigation associée au contenu, l'utilisateur peut déclencher le partage du contenu sur une simple commande vocale ou un geste prédéfini sur l'écran du premier terminal.

L'invention améliore ainsi nettement l'ergonomie lors d'un partage de contenu et en augmente la réactivité par rapport aux techniques de l'art antérieur en éliminant au cours de la communication le temps de transmission des contenus partagés qui provoque une latence préjudiciable à la spontanéité d'une conversation.

Selon un mode de réalisation particulier, lorsque le contenu numérique est reçu par le terminal destinataire, celui-ci peut détecter la mise en oeuvre d'une commande de navigation et transmettre une commande de restitution vers le premier terminal.

De cette façon, le terminal destinataire d'un contenu partagé peut commander sa restitution sur le premier terminal. Par exemple, le destinataire d'un partage peut mettre en oeuvre une commande de navigation provoquant l'envoi d'une commande de restitution vers le premier terminal, de manière à provoquer sur le premier terminal, l'affichage d'un contenu reçu précédemment.

Selon une réalisation particulière, le procédé est tel qu'il comporte en outre, à l'issue de l'étape d'association, des étapes de :
- mémorisation du contenu numérique et des commandes de navigation et de restitution associées,
- association des éléments mémorisés avec au moins une entrée d'un carnet d'adresses du terminal.

Un contenu à partager est mémorisé en association avec une ou plusieurs commandes de navigation et une ou plusieurs commandes de restitution. La mémorisation peut s'effectuer sur le premier terminal ou sur un dispositif de stockage en ligne tel qu'un site web, un serveur de fichier ou une base de données par exemple. Les données mémorisées sont associées avec une ou plusieurs entrées d'un carnet d'adresses ou encore à un groupe de contacts. Par exemple, un utilisateur peut associer une image, une commande vocale et une commande d'affichage à un contact particulier de son carnet d'adresses. Ainsi, le contenu est immédiatement disponible pour le partage lors d'une communication ultérieure avec ce contact, la commande de restitution étant exécutée sur le terminal du destinataire à la détection de la commande de navigation correspondante.

Selon un mode de réalisation particulier, le procédé est tel que la commande de transmission est différée à la détection d'un évènement de communication particulier.

De cette façon, le procédé peut déclencher la transmission du contenu vers le terminal destinataire selon la phase d'un appel. Par exemple, un événement de communication peut correspondre à la phase de numérotation ou de présentation d'une communication, à l'établissement d'une communication suite à l'acceptation d'un appel par un correspondant ou encore à la terminaison d'une communication. Ainsi, un utilisateur peut par exemple différer le transfert d'un contenu jusqu'au moment où un appel est accepté par le correspondant, de façon à ce que le contenu ne puisse pas être intercepté par le correspondant sans que l'appel ne soit établi. Le transfert peut aussi être déclenché dès la phase de numérotation afin que le contenu soit immédiatement disponible lorsque le correspondant accepte la communication.

Selon un mode particulier de réalisation, le procédé est tel qu'une commande de navigation correspond à une commande vocale détectée dans le flux audio de la communication.

En permettant à l'utilisateur d'associer au contenu à partager une commande vocale telle qu'un mot clef, l'invention contribue à améliorer l'ergonomie des services de communication enrichie. L'utilisateur peut de cette façon provoquer l'affichage ou encore l'enregistrement du contenu sur le terminal destinataire en prononçant le mot clef au cours d'une communication vocale par exemple. Le procédé évite ainsi des manipulations fastidieuses imposées par l'art antérieur.

Selon un mode particulier de réalisation, le procédé est tel qu'une commande de navigation correspond à une commande tactile détectée sur un écran associé au terminal.

L'utilisateur peut également associer une commande tactile au contenu. Cette commande peut être un geste particulier réalisé par le déplacement d'un contact avec l'écran du terminal ou sur un écran associé au terminal comme par exemple l'écran d'un dispositif connecté tel qu'une montre connectée. La restitution du contenu sur le terminal destinataire peut ainsi être provoquée par une simple action sur l'écran d'un bracelet connecté de l'utilisateur. Selon une réalisation particulière, le geste est un mouvement particulier du terminal selon 3 dimensions, le mouvement pouvant être capturé grâce à des capteurs inertiels du terminal ou d'un accessoire porté par exemple.

Selon un mode de réalisation particulier, le procédé est tel qu'une commande de restitution correspond à une commande d'affichage du contenu numérique.

La commande de restitution émise vers le terminal destinataire peut être une commande visant à déclencher l'affichage du contenu sur un écran du terminal destinataire ou un écran associé au terminal destinataire, comme par exemple l'écran d'une montre connectée associée au terminal destinataire. Ainsi, l'utilisateur du premier terminal peut, lorsqu'il exécute une commande de navigation, provoquer l'affichage du contenu sur le terminal destinataire au moment qui lui semble opportun. Le contenu ayant été transféré au préalable, la commande est exécutée sans latence due au temps de transmission du contenu.

Selon une réalisation particulière, le procédé est tel qu'une commande de restitution correspond à une commande de mémorisation du contenu numérique.

La commande de restitution émise vers le terminal destinataire peut aussi être une commande visant à déclencher la mémorisation du contenu sur le terminal destinataire. De cette façon, l'utilisateur du premier terminal peut commander l'enregistrement du contenu sur le terminal destinataire. Par exemple, le contenu peut être une image mémorisée dans un album photo du terminal destinataire ou encore dans un historique de communications, en association avec l'entrée correspondant à la communication.

Selon un autre aspect et de façon correspondante au procédé de partage, l'invention concerne un procédé de restitution d'un contenu numérique partagé en association avec une communication, le procédé étant tel qu'il comporte les étapes suivantes :
- Réception d'au moins un contenu numérique, et
   À l'établissement de la communication,
- Réception d'au moins une commande de restitution associée au contenu numérique reçu, et
- Exécution de la commande de restitution.

Un terminal peut ainsi recevoir un contenu partagé avant une communication et ne restituer ce contenu qu'à la réception d'une commande de restitution associée. La commande de restitution reçue peut par exemple correspondre à une commande d'affichage d'une image ou d'une vidéo à un emplacement particulier de l'écran ou sur un écran déporté comme une montre connectée par exemple, à la lecture d'une séquence musicale, ou encore à l'ouverture d'une page web. La commande de restitution peut également être une commande de changement de page dans le cas d'un document paginé tel qu'une présentation ou texte. La commande de restitution peut également être une commande de mémorisation du contenu sur le terminal permettant par exemple à l'utilisateur d'un premier terminal émetteur du contenu de commander l'enregistrement d'une image dans un album photo du terminal.

Selon un mode de réalisation particulier, le procédé de restitution est tel qu'une commande de restitution correspond à une commande d'affichage du contenu numérique reçu.

Un terminal destinataire est ainsi apte à afficher un contenu partagé lorsqu'il reçoit une commande de restitution associée. Un terminal émetteur peut ainsi commander l'affichage d'un contenu partagé sur le terminal du correspondant avec lequel il est en communication.

Selon un mode de réalisation particulier, le procédé de restitution est tel qu'une commande de restitution correspond à une commande de mémorisation du contenu numérique reçu.

Un terminal destinataire est ainsi apte à mémoriser un contenu partagé lorsqu'il reçoit une commande de restitution associée. Un terminal émetteur peut ainsi commander la mémorisation d'un contenu partagé sur le terminal du correspondant avec lequel il est en communication. Par exemple, le contenu partagé peut être mémorisé en association avec une entrée du carnet d'adresse associée à l'utilisateur partageant le contenu, ou encore dans un album photo du terminal.

L'invention concerne également un dispositif de partage d'un contenu numérique associé à une communication vers un terminal destinataire, le dispositif étant tel qu'il comporte:
- Une interface et une mémoire aptes à mettre en oeuvre et mémoriser une association d'un contenu numérique avec au moins une commande de navigation et au moins une commande de restitution,
- Un module de commande de transmission du contenu numérique vers le terminal destinataire,
- Un module de gestion d'appel pour établir une communication,
- Un module de détection d'une mise en oeuvre d'au moins une commande de navigation associée au contenu, et
- Un module de communication pour la transmission vers le terminal destinataire d'une commande de restitution associée au document,

Les modules de détection et de communication étant mis en oeuvre suite à l'établissement d'une communication par le module de gestion d'appel.

L'invention concerne aussi un dispositif de restitution d'un contenu numérique partagé en association avec une communication, tel qu'il comporte:
- Un module de communication pour recevoir au moins un contenu numérique et au moins une commande de restitution associée au contenu numérique reçu,
- Un module de gestion d'appel pour établir une communication,
- Un processeur apte à exécuter une commande de restitution, suite à l'établissement d'une communication par le module de gestion d'appel.

L'invention concerne également un terminal de communication tel qu'il comporte un dispositif de partage d'un contenu numérique tel que décrit ci-dessus.

L'invention concerne également un terminal de communication tel qu'il comporte un dispositif de restitution d'un contenu numérique partagé tel que décrit ci-dessus.

L'invention concerne également un terminal de communication tel qu'il comporte un dispositif de partage d'un contenu numérique et un dispositif de restitution d'un contenu numérique partagé tels que décrits ci-dessus.

L'invention se rapporte également à un programme d'ordinateur comportant les instructions pour l'exécution du procédé de partage d'un contenu numérique et/ou les instructions pour l'exécution du procédé de restitution d'un contenu numérique partagé, lorsque le programme est exécuté par un processeur.

L'invention concerne aussi un support d'informations lisible par un processeur sur lequel est enregistré un programme d'ordinateur comprenant des instructions pour l'exécution des étapes du procédé de partage d'un contenu numérique et/ou les instructions pour l'exécution du procédé de restitution d'un contenu numérique partagé.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La **figure 1** illustre une architecture adaptée pour mettre en oeuvre l'invention selon un mode particulier de réalisation,
- La **figure 2** représente de manière simplifiée les principales étapes du procédé de partage selon une réalisation particulière,
- La **figure 3** représente sous la forme d'un diagramme les étapes principales étapes du procédé de restitution d'un partage selon un mode de réalisation particulier,
- La **figure 4** illustre de manière simplifiée l'architecture d'un dispositif de partage de contenu selon un mode particulier de réalisation, et
- La **figure 5** représente une architecture simplifiée d'un dispositif de restitution d'un contenu partagé selon une réalisation particulière de l'invention.

### DESCRIPTION DÉTAILLÉE D'UN MODE DE RÉALISATION

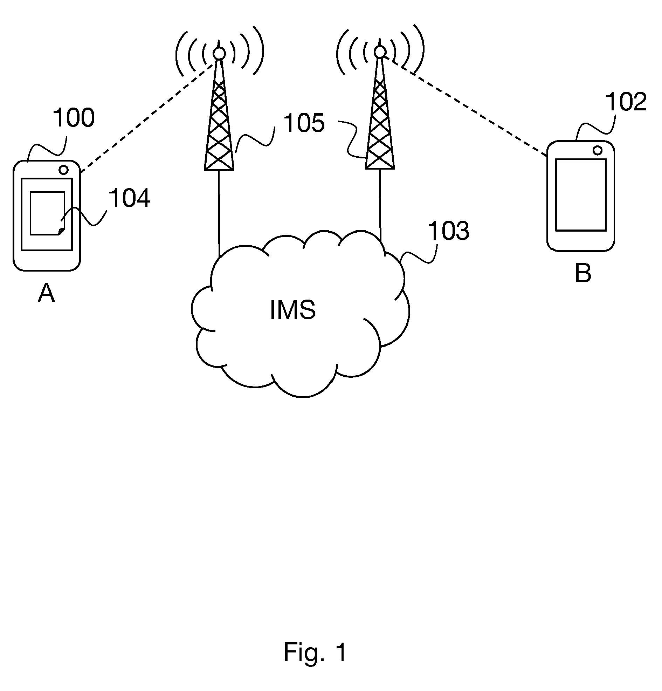

La **figure 1** illustre une architecture adaptée pour mettre en oeuvre l'invention selon un mode particulier de réalisation. Une telle architecture comprend dans cet exemple un premier terminal mobile 100 disposant d'un contenu à partager 104. Le terminal 100 est par exemple un smartphone adapté pour communiquer selon différentes modalités. Le terminal 100 est en particulier adapté pour émettre et recevoir des appels vocaux et peut aussi se connecter à un réseau de données tel que le réseau IMS 103 ou au réseau Internet. Le terminal 100 met en oeuvre le procédé de partage d'un contenu numérique selon un mode particulier de réalisation. Pour cela, le terminal comprend un processeur et une mémoire configurés pour exécuter des instructions pour l'exécution du procédé de partage d'un contenu numérique.

La **figure 1** représente également un terminal 102. Le terminal 102 est par exemple un smartphone configuré pour communiquer selon différentes modalités et en particulier pour émettre et recevoir des appels vocaux et se connecter à un réseau de données tel que le réseau IMS 103 ou au réseau Internet. Le terminal 102 met en oeuvre le procédé de restitution d'un partage selon un mode particulier de réalisation. Pour cela, le terminal comprend un processeur et une mémoire configurés pour exécuter des instructions pour l'exécution du procédé restitution d'un contenu numérique partagé.

Les terminaux 100 et 102 sont équipés d'une interface réseau 3G ou 4G leur permettant de se connecter au réseau IMS 103, d'échanger des données et d'établir des communications vocales par l'intermédiaire du réseau cellulaire 105.

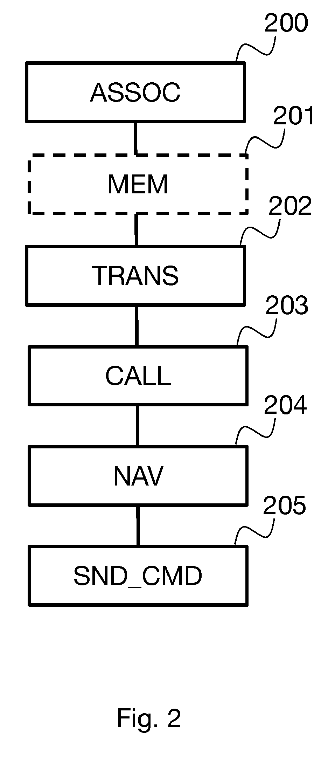

La **figure 2** représente de manière simplifiée les principales étapes du procédé de partage selon une réalisation particulière.

Nous prendrons pour exemple dans cette description d'un mode particulier de réalisation, la cas d'un utilisateur A du terminal 100 souhaitant partager le contenu numérique 104 avec l'utilisateur B au cours d'une communication vocale. Le contenu numérique 104 correspond par exemple à une image que l'utilisateur A souhaite commenter lors d'une communication avec B. Bien entendu, cet exemple n'est pas limitatif et l'invention s'applique de la même façon à différents types de contenus numériques, comme par exemple à une séquence vidéo ou audio, des documents issus d'un tableur ou d'un logiciel de traitement de texte ou même encore d'un site Internet. Dans ce dernier cas, le contenu numérique dont il est question dans cette description peut correspondre à l'URL (Universal Resource Locator) du site web. Selon un mode de réalisation particulier, le contenu numérique 104 correspond à un ensemble de documents numériques, comme par exemple une liste de documents, ordonnée ou non, de même type ou bien de types différents.

Lors d'une première étape 200, le contenu numérique à partager est associé avec au moins une commande de navigation et au moins une commande de restitution. Pour cela, le terminal peut inviter l'utilisateur à sélectionner un ou plusieurs documents qu'il souhaite partager au travers d'une interface graphique adaptée. Le terminal propose ensuite à l'utilisateur d'associer une commande de navigation au contenu sélectionné. La commande de navigation associée au contenu permet de contrôler le partage du contenu associé en cours de communication. Selon une réalisation particulière, plusieurs commandes de navigation sont associées à un contenu. Par exemple, lorsque le contenu est constitué de plusieurs documents, il est possible d'associer une commande de navigation par documents. Selon un autre exemple, dans le cas d'un contenu numérique paginé, une commande de navigation peut être associée à une page particulière, à la page suivante ou à la page précédente.

Une commande de navigation peut être de différent type. Par exemple, il peut s'agir d'une commande vocale comme un mot clef prononcé par l'utilisateur, un geste réalisé sur l'écran tactile du terminal, une interaction réalisée sur un dispositif porté associé au terminal comme par exemple une montre ou un bracelet connecté, un mouvement particulier selon 3 dimensions détecté par des capteurs inertiels de type accéléromètres, gyroscope et/ou boussole ou encore une action sur un bouton du terminal. Le terminal peut proposer à l'utilisateur d'associer une commande parmi une liste de commandes préconfigurées ou bien d'enregistrer une nouvelle commande de navigation. Par exemple, le terminal peut proposer à l'utilisateur d'enregistrer un mot clef à l'aide d'un microphone du terminal afin de créer une nouvelle commande de navigation vocale. Le terminal peut aussi proposer à l'utilisateur d'assigner un bouton physique du terminal à la commande de navigation, comme un bouton de contrôle de volume sonore par exemple, ou encore par exemple proposer d'associer le masquage de l'objectif d'un appareil photo du terminal par un doigt à une commande de navigation de façon à ce que l'utilisateur puisse mettre en oeuvre une commande de navigation d'un simple geste en conservant le terminal à l'oreille Selon une réalisation particulière, la commande de navigation correspond à un évènement de communication, comme par exemple le déclenchement d'une phase de numérotation, l'établissement d'un appel ou encore la fin d'un appel. De cette façon, le procédé permet de transmettre une commande de restitution associée à un contenu en fonction de la phase d'établissement de l'appel. Il est ainsi possible de commander l'affichage ou la mémorisation d'une image lors de la présentation d'un appel, pendant un appel ou en fin d'appel.

Le procédé permet également à l'utilisateur d'associer une commande de restitution au contenu. Pour cela, le terminal propose par exemple une liste de commandes de restitution préconfigurées au travers d'une interface adaptée et invite l'utilisateur à sélectionner une ou plusieurs commandes à associer au contenu. Une commande de restitution correspond à une action associée au contenu à réaliser sur le terminal destinataire. Par exemple, il peut s'agir d'une action d'affichage d'une image, de lecture ou d'arrêt de lecture d'une séquence audio ou vidéo ou de déplacement dans la séquence, d'affichage d'un document bureautique ou de passage à une page suivante ou précédente de ce document, ou encore de mémorisation du document sur le terminal destinataire, par exemple dans un historique d'appel ou dans une photothèque ou de téléchargement d'un document disponible en ligne. Plusieurs commandes de restitutions peuvent être associées au contenu. Par exemple, lorsqu'un contenu numérique comprend plusieurs documents, une commande de restitution particulière peut être associée à chaque document. Selon un autre exemple, une image peut être associée à une commande de restitution visant à provoquer un affichage sur le terminal destinataire et une commande de restitution visant à provoquer la mémorisation du contenu sur le terminal du destinataire.

Selon un mode particulier de réalisation, le contenu et les commandes de navigation et de restitution associées sont mémorisées à l'étape 201. La mémorisation est par exemple effectuée dans une base de données du terminal 100 et permet à l'utilisateur de réutiliser ultérieurement le contenu et les commandes associées. La mémorisation peut également être effectuée sur un serveur accessible par une connexion de données. Selon une réalisation particulière, le contenu et les commandes associées sont mémorisées en association avec une entrée d'un carnet d'adresses associé au terminal. Par exemple, le contenu et les commandes de navigation et de restitutions associées sont mémorisées dans la base de données d'un carnet d'adresses du terminal 100 en association avec l'entrée correspondant à l'utilisateur B de la **figure 1****.** Ainsi, l'utilisateur A du terminal 100 peut mémoriser différents types de document qu'il envisage de partager avec B au cours d'une future communication. Dans un mode particulier de réalisation, ces données sont mémorisées en association avec un groupe constitué par un ensemble d'entrées du carnet d'adresses.

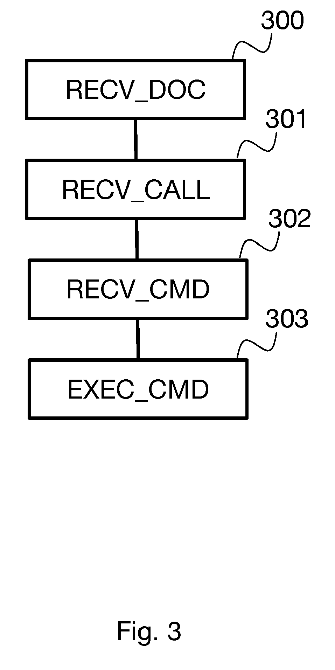

Lors de l'étape 202, le terminal commande la transmission du contenu numérique vers le terminal destinataire. Pour cela, le terminal 100 peut établir une connexion avec le terminal 102 au travers du réseau IMS 103 par exemple et déclencher le transfert du contenu vers le terminal. Ce transfert de données peut être réalisé à l'aide de différents protocoles de transmission, comme par exemple en utilisant le protocole http (HyperText Transfer Protocol) ou MSRP (Message Session Relay Protocol) ou tout autre protocole de transfert de données adapté. Le document est reçu par le terminal 102 lors d'une étape 300 représentée sur la **figure 3****.** Le contenu est alors mémorisé provisoirement sur le terminal 102. Selon une réalisation particulière, des options de sécurité sur le terminal 102 permettent à l'utilisateur d'accepter ou de refuser la mémorisation ou le transfert du contenu, ou d'imposer une analyse par un logiciel antivirus.

Selon un mode de réalisation particulier, l'étape de transmission est différée à la détection d'un évènement de communication. Par exemple, la transmission peut être déclenchée dès que l'utilisateur A du terminal 100 compose le numéro d'appel de B, lorsque l'appel est présenté sur le terminal de B ou lorsque la communication est établie, ou bien encore lorsque la communication est terminée. De cette manière, l'utilisateur A peut s'assurer que le transfert du contenu vers B n'interviendra que lorsque des conditions particulières sont réunies. Par exemple, en différant la commande de transmission jusqu'à la survenance d'un évènement indiquant que la communication est établie, l'utilisateur A peut s'assurer que le contenu ne sera disponible sur le terminal de B que lorsque A et B seront effectivement en communication. Selon un autre exemple, A peut paramétrer l'étape de transmission d'un contenu de manière à ce que ce dernier ne soit transmis que lorsque la communication est terminée en vue de transmettre par exemple une carte de visite à B.

À l'étape 203, une communication vocale est établie entre le terminal 100 et le terminal 102. Dans cette exemple, la communication est initiée par l'utilisateur A du terminal 100 à destination de l'utilisateur B du terminal 102, mais l'invention s'applique également lorsque la communication est initiée par l'utilisateur B du terminal 102. La communication peut être un appel vocal classique utilisant le réseau GSM, ou un réseau IP (Internet Protocol) tel que le réseau IMS 103. Il peut également s'agir d'un appel vidéo. L'appel est accepté à l'étape 301 par le terminal 102.

Ainsi, le contenu partagé depuis le terminal 100 a été transmis au terminal 102 via une connexion de données pendant la phase d'établissement d'appel. À l'étape 204, le terminal 100 détecte qu'au moins une commande de navigation a été mise en oeuvre. Pour cela, lorsque la commande de navigation est une commande vocale, le terminal 100 peut analyser le signal audio capturé par un microphone du terminal selon des techniques classiques de reconnaissance vocale, afin d'y détecter un mot clef prononcé par l'utilisateur et associé au contenu lors de l'étape 200 d'association. Lorsque la commande est une commande tactile, le terminal peut détecter les déplacements d'un contact sur la surface d'un écran tactile associé au terminal et analyser les déplacements de ce contact afin de détecter une commande de navigation lorsque le geste correspond au geste associé au contenu. Lorsque la commande de navigation est une action particulière effectuée sur un dispositif porté de type bracelet connecté ou montre connectée, la commande de navigation peut être détectée en analysant des notifications reçues par une interface Bluetooth ou Wi-Fi adaptée pour communiquer avec le dispositif. Le terminal peut également analyser les données issues de capteurs inertiels associés au terminal pour détecter un geste en 3 dimensions ou interpréter des actions effectuées sur un dispositif d'entrée tel qu'un bouton. Lorsque la mise en oeuvre de plusieurs commandes de navigation est détectée par le terminal, celui-ci peut constituer une liste de commandes de navigation qui seront interprétées séquentiellement.

A la détection d'une telle commande de navigation, le terminal 100 recherche le contenu et la commande de restitution associés à l'étape 200 et transmet cette commande de restitution au terminal 102 lors d'une étape 205. Pour cela, le terminal 100 utilise par exemple une connexion de données telle qu'une connexion Wi-Fi, 3G ou 4G sur laquelle est mis en oeuvre un protocole d'échange de données tel que MSRP ou http par exemple. La commande de restitution peut alors prendre la forme d'un message comportant au moins un identifiant du contenu et au moins une instruction relative à une action à effectuer sur ce contenu. Le message peut également comporter des paramètres additionnels comme par exemple un numéro de page ou une information temporelle indiquant une position de lecture d'une séquence audio/vidéo.

La commande de restitution est reçue par le terminal 102 à l'étape 302 par l'intermédiaire d'une interface réseau du terminal. À partir de l'identifiant du contenu compris dans le message, le terminal 102 recherche le contenu reçu à l'étape 300 et associé à la commande de restitution.

Le terminal 102 exécute la commande de restitution à l'étape 303. Par exemple, de manière non exhaustive la commande de restitution peut être une commande d'affichage du contenu sur une zone particulière de l'écran, une commande de mémorisation du contenu sur le terminal 102, une commande de contrôle de la lecture d'une séquence audio ou vidéo, ou encore de changement de page dans un document paginé.

De cette façon, l'utilisateur A du terminal 100 peut partager et commenter différents contenus au cours d'une communication sans que cela nécessite de manipulations complexes sur le terminal. D'autre part, lorsque les contenus à partager sont transmis vers le terminal du correspondant avant l'établissement de la communication, le contenu peut être présenté sur le terminal destinataire avec une grande réactivité.

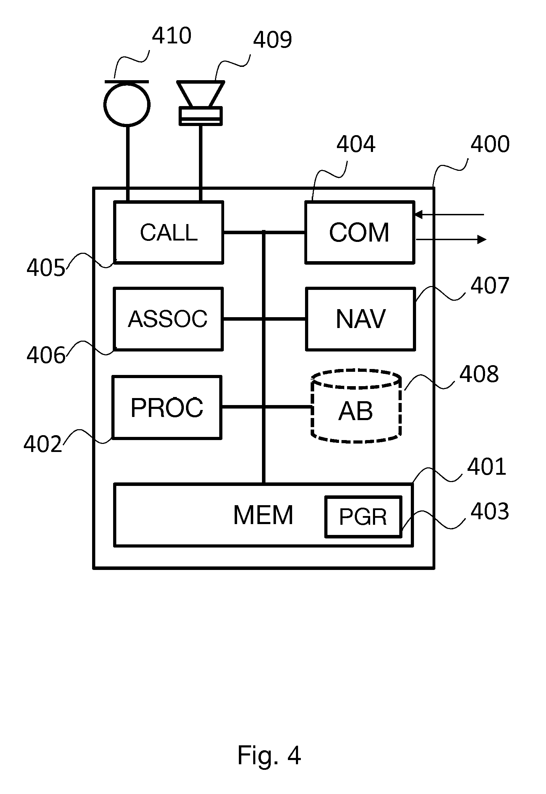

La figure 4 illustre un dispositif 400 mettant en oeuvre le procédé de partage d'un contenu numérique associé à une communication, selon un mode particulier de réalisation de l'invention. Le dispositif comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en oeuvre le procédé de partage tel que décrit dans l'invention en référence aux figures 1, 2, et 3, et notamment les étapes d'association d'un contenu numérique avec au moins une commande de navigation et au moins une commande de restitution, de commande de transmission du contenu numérique vers le terminal destinataire, et à l'établissement de la communication, de détection de la mise en oeuvre d'au moins une commande de navigation associée au contenu, et de transmission vers le terminal destinataire d'une commande de restitution associée au document.

À l'initialisation, les instructions du programme d'ordinateur 403 sont par exemple chargées dans une mémoire RAM (Random Access Memory) avant d'être exécutées par le processeur de l'unité de traitement 402. Le processeur de l'unité de traitement 402 met en oeuvre les étapes du procédé de partage selon les instructions du programme d'ordinateur 403.

Pour cela, le dispositif comprend, outre la mémoire 401, un module de communication 404 (COM) adapté pour se connecter à un réseau et échanger des données avec d'autres dispositifs, et en particulier pour transmettre un contenu et une commande de restitution vers un terminal. Ce module de communication peut correspondre à une interface réseau Wi-Fi, ou une interface permettant de se connecter à un réseau de données cellulaires de type 3G ou 4G. Le dispositif comprend également un module de gestion d'appel 405 (CALL) permettant par exemple d'établir des communications vocales avec un autre terminal. Ce module de gestion d'appel est connecté à un microphone 410 et un haut-parleur 409 permettant à un utilisateur du terminal d'échanger des paroles avec un correspondant. Le dispositif comprend une interface d'association 406 (ASSOC) configuré pour établir des associations entre un contenu et au moins une commande de navigation et au moins une commande de restitution, l'association pouvant être réalisée en mémorisant par exemple une table dans la mémoire 401, la table mettant en relation un identifiant du contenu, un identifiant d'une commande de navigation et un identifiant d'une commande de restitution.

Outre les modules décrits précédemment, le dispositif peut comprendre, selon un mode de réalisation particulier, une base de données 408 (AB) configurée pour mémoriser un contenu en association avec au moins une commande de navigation et au moins une commande de restitution. Par exemple, la base de données 408 peut être un carnet d'adresses du terminal configuré pour mémoriser un contenu, une commande de navigation et une commande de restitution en association avec une entrée particulière du carnet d'adresses.

Le dispositif comprend aussi un module de détection de la mise en oeuvre d'une commande de navigation 407 (NAV). Selon un mode de réalisation particulier, le microphone 410 est adapté pour capturer un signal audio qui peut être utilisé par le module de détection d'une commande de navigation 407 (NAV) pour détecter à l'aide d'un algorithme de reconnaissance de la parole, un mot clefs prononcé par l'utilisateur du terminal afin de déclencher l'envoi d'une commande de restitution vers un terminal destinataire du partage. Selon une réalisation particulière, le module de détection 407 est adapté pour interpréter des signaux issus de capteurs inertiels dont le dispositif peut être pourvu afin de détecter un mouvement particulier du terminal correspondant à une commande de navigation. Selon un mode de réalisation particulier, le module de détection 407 est adapté pour interpréter des déplacements d'un contact sur un écran tactile associé au dispositif afin de détecter une commande de navigation par correspondance entre les déplacements constatés du contact et un geste prédéfini. Selon une autre réalisation particulière, le module de détection 407 est configuré pour recevoir des informations en provenance d'un autre dispositif tel qu'un bracelet connecté ou une montre et de détecter une commande de navigation réalisée sur cet autre dispositif.

Selon un mode particulier de réalisation, le dispositif est intégré dans un terminal mobile de type smartphone ou une tablette tactile.

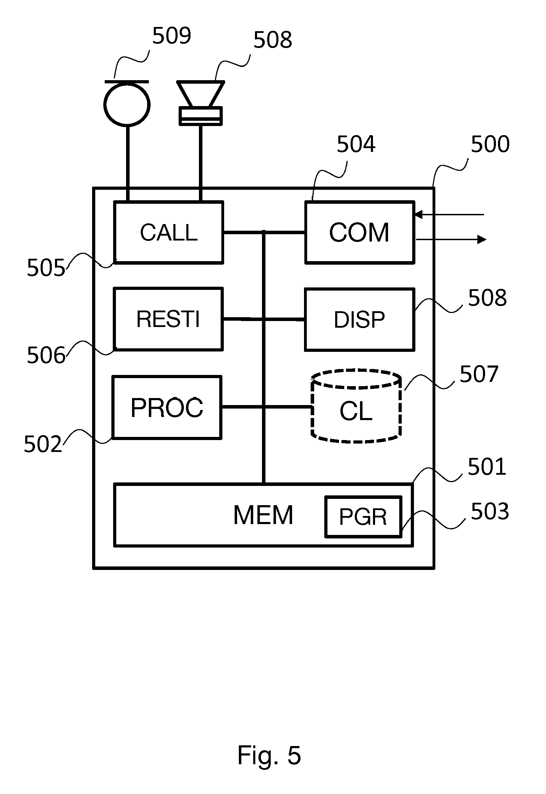

La figure 5 illustre un dispositif 500 mettant en oeuvre le procédé de restitution d'un contenu numérique partagé, selon un mode particulier de réalisation de l'invention. Le dispositif comprend un espace de stockage 501, par exemple une mémoire MEM, une unité de traitement 502 équipée par exemple d'un processeur PROC. L'unité de traitement peut être pilotée par un programme 503, par exemple un programme d'ordinateur PGR, mettant en oeuvre le procédé de restitution tel que décrit dans l'invention en référence aux figures 1, 2, et 3, et notamment les étapes de réception d'au moins un contenu numérique, et à l'établissement de la communication, de réception d'au moins une commande de restitution associée au contenu numérique reçu, et d'exécution de la commande de restitution.

À l'initialisation, les instructions du programme d'ordinateur 503 sont par exemple chargées dans une mémoire RAM (Random Access Memory) avant d'être exécutées par le processeur de l'unité de traitement 502. Le processeur de l'unité de traitement 502 met en oeuvre les étapes du procédé de restitution selon les instructions du programme d'ordinateur 503.

Pour cela, le dispositif comprend, outre la mémoire 501, un module de communication 504 (COM) adapté pour se connecter à un réseau et échanger des données avec d'autres dispositifs, et en particulier pour recevoir un contenu et une commande de restitution en provenance d'un terminal. Ce module de communication peut correspondre à une interface réseau Wi-Fi, ou une interface permettant de se connecter à un réseau de données cellulaires de type 3G ou 4G. Le dispositif comprend également un module de gestion d'appel 505 (CALL) permettant par exemple d'établir des communications vocales avec un autre terminal. Ce module de gestion d'appel est connecté à un microphone 509 et un haut-parleur 508 permettant à un utilisateur du terminal d'échanger des paroles avec un correspondant. Le dispositif comprend un module de restitution 506 adapté pour interpréter et exécuter un commande de restitution reçue via le module de communication 504. Selon un mode de réalisation particulier, le module de restitution 506 est adapté pour commander l'affichage d'un contenu associé à une commande de restitution reçue sur un écran associé au dispositif. Le module de restitution peut être par exemple un processeur apte à exécuter une commande de restitution. Selon un mode de réalisation particulier, le module de restitution 506 est adapté pour commander la mémorisation d'un contenu partagé dans une mémoire du terminal comme par exemple dans la mémoire 501 ou dans une base de données telle que par exemple une base de données d'historique d'appel 507 (CL) dont le dispositif peut être pourvu dans un mode de réalisation particulier.

Selon un mode particulier de réalisation, le dispositif est intégré dans un terminal mobile de type smartphone ou une tablette tactile.

## Revendications

1. Procédé de partage d'un contenu numérique associé à une communication entre un premier terminal et un terminal destinataire, **caractérisé en ce qu'**il comporte les étapes suivantes mises en oeuvre sur le premier terminal:
- Association (200) d'un contenu numérique avec au moins une commande de navigation et au moins une commande de restitution,
- Commande (202) de transmission du contenu numérique vers le terminal destinataire, et
A l'établissement de la communication,
- Détection (204) de la mise en oeuvre d'au moins une commande de navigation associée au contenu, et
- Transmission (205) vers le terminal destinataire d'une commande de restitution associée au document.

2. Procédé selon la revendication 1 **caractérisé en ce qu'**il comporte en outre, à l'issue de l'étape d'association, des étapes de :
- mémorisation du contenu numérique et des commandes de navigation et de restitution associées,
- association des éléments mémorisés avec au moins une entrée d'un carnet d'adresses du terminal.

3. Procédé selon l'une quelconque des revendications précédentes **caractérisé en ce que** la commande de transmission est différée à la détection d'un événement de communication particulier.

4. Procédé selon l'une quelconque des revendications précédentes **caractérisé en ce qu'**une commande de navigation correspond à une commande vocale détectée dans le flux audio de la communication.

5. Procédé selon l'une quelconque des revendications précédentes **caractérisé en ce qu'**une commande de navigation correspond à une commande tactile détectée sur un écran associé au terminal.

6. Procédé selon l'une quelconque des revendications précédentes **caractérisé en ce qu'**une commande de restitution correspond à une commande d'affichage du contenu numérique.

7. Procédé selon l'une quelconque des revendications précédentes **caractérisé en ce qu'**une commande de restitution correspond à une commande de mémorisation du contenu numérique.

8. Procédé de restitution d'un contenu numérique partagé en association avec une communication, **caractérisé en ce qu'**il comporte les étapes suivantes :
- Réception(300) d'au moins un contenu numérique, et
À l'établissement de la communication,
- Réception (302) d'au moins une commande de restitution associée au contenu numérique reçu, et
- Exécution (303) de la commande de restitution.

9. Procédé selon la revendication 8 **caractérisé en ce qu'**une commande de restitution correspond à une commande d'affichage du contenu numérique reçu.

10. Procédé selon la revendication 8 **caractérisé en ce qu'**une commande de restitution correspond à une commande de mémorisation du contenu numérique reçu.

11. Dispositif de partage d'un contenu numérique associé à une communication vers un terminal destinataire, **caractérisé en ce qu'**il comporte:
- Une interface et une mémoire aptes à mettre en oeuvre et mémoriser une association d'un contenu numérique avec au moins une commande de navigation et au moins une commande de restitution,
- Un module de commande de transmission du contenu numérique vers le terminal destinataire,
- Un module de gestion d'appel pour établir une communication,
- Un module de détection d'une mise en oeuvre d'au moins une commande de navigation associée au contenu, et
- Un module de communication pour la transmission vers le terminal destinataire d'une commande de restitution associée au document,
Les modules de détection et de communication étant mis en oeuvre suite à l'établissement d'une communication par le module de gestion d'appel.

12. Dispositif de restitution d'un contenu numérique partagé en association avec une communication, **caractérisé en ce qu'**il comporte:
- Un module de communication pour recevoir au moins un contenu numérique et au moins une commande de restitution associée au contenu numérique reçu,
- Un module de gestion d'appel pour établir une communication, et
- Un processeur apte à exécuter une commande de restitution, suite à l'établissement d'une communication par le module de gestion d'appel.

13. Terminal **caractérisé en ce qu'**il comporte un dispositif de partage d'un contenu numérique selon la revendication 11 et/ou un dispositif de restitution d'un contenu numérique partagé selon la revendication 12.

14. Programme d'ordinateur comportant les instructions pour l'exécution du procédé de partage d'un contenu numérique selon l'une quelconque des revendications 1 à 7 et/ou les instructions pour l'exécution du procédé de restitution d'un contenu numérique partagé selon la revendication 8, lorsque le programme est exécuté par un processeur.

15. Support d'informations lisible par un processeur sur lequel est enregistré un programme d'ordinateur comprenant des instructions pour l'exécution des étapes du procédé de partage d'un contenu numérique selon l'une quelconque des revendications 1 à 7 et/ou les instructions pour l'exécution du procédé de restitution d'un contenu numérique partagé selon l'une des revendications 8 à 10.
